# EUROPÄISCHE PATENTSCHRIFT

(11) **EP 3 438 002 B1**
(45) Veröffentlichungstag und Bekanntmachung des Hinweises auf die Patenterteilung: **04.11.2020**
(21) Anmeldenummer: 18186903.3
(22) Anmeldetag: 01.08.2018
(51) Int. Cl.: B64F 1/31, A61G 3/06, B64F 1/32

(54) **HUBFAHRZEUG ZUM TRANSPORT VON PERSONEN IM FLUGHAFENBEREICH**
LIFTING VEHICLE FOR TRANSPORTING PERSONS IN THE AIRPORT AREA
CHARIOT ÉLÉVATEUR DESTINÉ AU TRANSPORT DE PERSONNES DANS LA ZONE D'AÉROPORT

(30) Priorität: 02.08.2017 DE 102017117492
(43) Veröffentlichungstag der Anmeldung: 06.02.2019
(73) Patentinhaber: Penetsdorfer, Markus, 1200 Wien (AT)
(72) Erfinder: Penetsdorfer, Markus, 1200 Wien (AT)
(74) Vertreter: Keilitz, Wolfgang

(56) Entgegenhaltungen:
- WO-A2-2005/091951
- CN-A- 101 391 733
- DE-A1-102016 100 695
- DE-U1- 9 004 237
- GB-A- 924 971
- US-A- 2 778 674
- US-A- 3 268 033
- US-A- 3 537 745
- US-A1- 2008 185 222

## Beschreibung

Die Erfindung betrifft ein Hubfahrzeug zum Transport von Personen oder Lasten insbesondere im Flughafenbereich, mit einem U-förmigen Fahrgestell, das einen zentralen Bereich aufweist, in dem sich eine Hubplattform befindet, welche mittels einer Hubvorrichtung in vertikaler Richtung aufwärts oder abwärts bewegt werden kann.

### HINTERGRUND DER ERFINDUNG

Derartige Hubfahrzeuge, die auch als Hubliftfahrzeuge bezeichnet werden, kommen insbesondere an Flughäfen zum Einsatz. Mit ihnen können Rollstuhlfahrer z. B. ebenerdig aufgenommen und zu einem Flugzeug befördert werden, wo sie dann auf die Einstiegshöhe des Flugzeugs angehoben werden.

Aus der US 4,176,732 A ist ein Personenlift bekannt, der insbesondere zum Transport von Behinderten oder alten Menschen geeignet ist und einen Gabelstapler mit einer daran befestigten Kabine umfasst. Die Höhe der Zuladung ist bei diesem Personenlift allerdings relativ gering.

Die DE 102 584 74 A1 offenbart ein Hubliftfahrzeug für den Transport von Personen und Lasten am Flughafen, das nach dem Prinzip eines Seitengabelstaplers aufgebaut ist. Das Hubliftfahrzeug umfasst eine Hubkabine, die an einem Hubmast des Seitengabelstaplers befestigt ist und zwischen einer Position, in der die Hubkabine auf die Fahrbahn aufgesetzt und einer Position, in der die Hubkabine auf die Einstiegsschwelle eines Flugzeugs angehoben ist, bewegt werden kann. Damit Personen am Boden aufgenommen werden können, muss die Hubkabine allerdings zusammen mit dem Hubmast seitlich ausgefahren und dann neben dem Trägerfahrzeug ebenerdig auf die Fahrbahn abgesetzt werden. Dieser Vorgang des seitlichen Ausfahrens von Hubeinrichtung und Hubplattform führt dazu, dass sich die Standfläche des Hubfahrzeugs mehr als verdoppelt. Außerdem verlängert sich der gesamte Hubvorgang dadurch erheblich.

Ein weiteres Hubliftfahrzeug mit einem U-förmigen Fahrgestell ist aus der G 90 04 237 U1 bekannt. Dieses Hubliftfahrzeug umfasst eine Hubkabine, die mit Hilfe mehrerer Hydraulikzylinder auf und ab beweglich ist. Die dort vorgeschlagene Konstruktion der Hubvorrichtung bietet allerdings bei hohen Windgeschwindigkeiten nicht die erforderliche Stabilität. Außerdem ist es nicht möglich, das Fahrzeug mit angehobener Kabine zu bewegen, weil die Hydraulikzylinder dann unzulässigerweise Querkräfte aufnehmen müssten. Dies würde die Zylinder undicht werden lassen oder könnte bei hohen Kräften zum Abknicken der Zylinderrohre führen.

Weitere Hubfahrzeuge mit einer Hubvorrichtung zum Anheben einer Hubkabine sind aus der US 3 268 033 A, der DE 79 12 874 U1, der DE 29 17 479 A1, der DE 79 06 399 U1 sowie der DE 22 45 974 A bekannt.

Die aus der US3268033A bekannte Erfindung, weist eine Konstruktion auf, bei der jeweils eine einseitige asymmetrische Aufnahme der Hubplattform erfolgt. Dadurch ist die Länge und Breite der Hubplattform stark eingeschränkt, was bedeutet, es kann nur ein Rollstuhlfahrer transportiert werden In der DE9004237U1 ist ein Hubliftfahrzeug beschrieben, bei dem vier mehrstufige Hubzylinder eine Hubkabine aus einem U-förmigen Fahrgestell herausheben und senken können. Dieses Hubfahrzeug ist mit angehobener Kabine nicht verfahrbar und muss zudem rückwärts an das Luftfahrzeug manövriert werden. Da hiermit ein vollständiger Andockprozess nicht möglich ist, muss die Hubkabine nach erfolgter vertikaler Positionierung noch horizontal verschoben werden.

Weitere Hubfahrzeuge sind aus der WO2005091951 A2, der GB 924 971 A sowie der US 3 537 745 A bekannt.

### AUFGABE DER ERFINDUNG

Es ist daher eine Aufgabe der vorliegenden Erfindung, ein Hubfahrzeug zum Transport von Personen oder Lasten im Flughafenbereich zu schaffen, mit dem z. B. mehrere Rollstuhlfahrer und deren Begleitpersonen schnell und sicher ein- und ausgeladen werden können und dessen Hubvorrichtung eine deutlich höhere Stabilität gegenüber Querkräften aufweist.

Gelöst wird diese Aufgabe gemäß der Erfindung durch die im Patentanspruch 1 angegebenen Merkmale. Weitere Ausgestaltungen der Erfindung ergeben sich aus den Unteransprüchen.

Gemäß der Erfindung wird ein Hubfahrzeug zum Transport von Personen oder Lasten, insbesondere im Flughafenbereich vorgeschlagen, das ein U-förmiges Fahrgestell mit einem zentralen Bereich aufweist, in dem sich eine Hubplattform befindet, die mittels einer Hubvorrichtung aufwärts oder abwärts bewegt werden kann. Das erfindungsgemäße Hubfahrzeug zeichnet sich dadurch aus, dass die Hubvorrichtung mehrere teleskopisch ausfahrbare Hubzylinder umfasst, die an beiden Längsseiten der Hubplattform seitlich am Fahrgestell befestigt und so ausgelegt sind, dass die Hubplattform durch Ausfahren oder Einfahren der Hubzylinder in vertikaler Richtung angehoben beziehungsweise abgesenkt werden kann. Darüber hinaus umfasst das erfindungsgemäße Hubfahrzeug mehrere seitlich am Fahrgestell angeordnete Teleskopsäulen zum Stabilisieren der Hubplattform, wobei die Teleskopsäulen jeweils mit der Hubplattform verbunden sind und bei einer durch die Hubvorrichtung angetriebenen Bewegung der Hubplattform in vertikaler Richtung passiv mitgenommen werden. Die Hubvorrichtung hat dadurch eine wesentlich höhere Stabilität, so dass sie auch noch bei hohen Windgeschwindigkeiten genutzt werden kann, ohne dass es zu einer Überlastung der Hydraulikzylinder aufgrund der seitlichen Belastung der Hubvorrichtung kommt.

Gemäß einer bevorzugten Ausführungsform der Erfindung ist die Hubvorrichtung so konstruiert, dass sie ausschließlich eine vertikale Hubbewegung (und keine seitliche Bewegung) ausführt.

Die Hubvorrichtung ist vorzugsweise ein hydraulisch angetriebenes System. Sie umfasst vorzugsweise mehrere Hubzylinder, die jeweils am Fahrgestell befestigt sind.

Gemäß einer bevorzugten Ausführungsform der Erfindung ist die Anzahl der Hubmechnanismen (d.h. der Hubzylinder, Spindeln, Hubscheren oder dgl.) der Hubvorrichtung kleiner als die Anzahl der Teleskopsäulen zum Stabilisieren der Hubplattform. Das Hubfahrzeug kann z.B. zwei Hubzylinder und insgesamt vier Teleskopsäulen zum Stabilisieren der Hubplattform aufweisen.

Gemäß einer Ausführungsform der Erfindung umfasst jeder Hubmechanismus der Hubvorrichtung vorzugsweise eine Hubkette, die an einem Ende am Fahrgestell oder einem damit fest verbundenen Element, und an ihrem anderen Ende an der Hubplattform oder einem damit fest verbundenen Element befestigt ist. Dies hat den Vorteil, dass die Hubplattform über den Hubweg der Hubvorrichtung hinaus zusätzlich angehoben werden kann. Der gesamte Hubweg der Hubplattform ist also größer als der Weg, den die Hubvorrichtung maximal ausfahren kann.

Die Hubmechanismen der Hubvorrichtung umfassen vorzugsweise jeweils eine Umlenkrolle, über die die Hubkette geführt ist. Die Umlenkrolle befindet sich vorzugsweise an einem oberen Ende der Hubmechanismen.

Im Rahmen dieser Erfindung wird der Begriff "Hubplattform" synonym für die von der Hubvorrichtung angehobene bauliche Einheit verwendet. Unter dem Begriff "Hubplattform" ist daher je nach Ausführungsform z. B. auch eine "Hubkabine" zu verstehen.

Die Hubmechanismen der Hubvorrichtung umfassen vorzugsweise mehrere ineinander laufende Zylinder bzw. Rohre.

Gemäß einer speziellen Ausführungsform der Erfindung umfassen die Teleskopsäulen zum Stabilisieren der Hubplattform jeweils mehrere ineinander angeordnete Rohre. Die Teleskopsäulen zum Stabilisieren der Hubplattform können ein rechteckiges oder quadratisches Profil aufweisen. Dadurch können seitliche Kräfte noch besser aufgenommen werden als beispielsweise von runden Säulen.

Die einzelnen Rohre der Teleskopsäulen können z. B. über Lagerbuchsen geführt sein, die im Zwischenraum zwischen zwei benachbarten Rohren untergebracht sind. Die einzelnen Rohre der Teleskopsäulen können somit im Wesentlichen spielfrei aus- und eingefahren werden.

Sofern die Teleskopsäulen ein rechteckiges oder quadratisches Profil aufweisen, können zwischen den Gleitflächen der Teleskoprohre Distanz- und Gleitplatten angebracht sein, damit die Rohre annähernd spielfrei ein- und ausgefahren werden können.

Das U-förmige Fahrgestell des erfindungsgemäßen Hubfahrzeugs ist vorzugsweise nach vorne hin offen.

Gemäß einer bevorzugten Ausführungsform der Erfindung ist die Hubplattform als Hubkabine ausgeführt. An der Vorderseite der Hubkabine befindet sich vorzugsweise eine ausfahrbare Plattform.

Gemäß einer bevorzugten Ausführungsform der Erfindung befindet sich in der Hubkabine bzw. auf der Hubplattform auch ein Führerstand, von dem aus vorzugsweise sowohl die Hubvorrichtung betätigt als auch das Hubfahrzeug gefahren werden kann. In Verbindung mit dem U-förmigen, nach vorne hin offenen, Fahrgestell hat dies den Vorteil, dass der Fahrer in jeder Position einen besonders guten Überblick über sein Rangier- und Fahrumfeld hat. Da sich der Fahrer im selben Raum wie seine Passagiere befindet, kann er gleichzeitig auch Betreuungsaufgaben übernehmen.

Das erfindungsgemäße Hubfahrzeug kann beispielsweise mittels Dieselmotor oder auch mittels eines Elektroantriebs erfolgen. Im Falle eines Elektroantriebs ist vorzugsweise eine Batterie am Fahrgestell montiert.

### KURZE BESCHREIBUNG DER ZEICHNUNGEN

Die Erfindung wird nachstehend anhand der beigefügten Zeichnungen beispielhaft näher erläutert. Es zeigen:
Fig. 1 eine perspektivische Ansicht eines Hubfahrzeugs mit einer zentral angeordneten Hubkabine, die sich in einer leicht angehobenen Fahrposition befindet;
Fig. 2 eine Frontansicht des Hubfahrzeugs von Fig. 1;
Fig. 3 eine Frontansicht des Hubfahrzeugs von Fig. 1 mit einer auf die Fahrbahn abgesetzten Hubkabine;
Fig. 4 eine perspektivische Darstellung des Hubfahrzeugs mit angehobener Hubkabine;
Fig. 5 eine perspektivische Darstellung des Hubfahrzeugs ohne Hubkabine;
Fig. 6 eine vergrößerte Ansicht einer der Teleskopsäulen zum Stabilisieren der Hubkabine;
Fig. 7 eine vergrößerte Darstellung eines Übergangsbereichs zweier benachbarter Rohre der Teleskopsäule von Fig. 6;
Fig. 8 eine Detailansicht eines der hydraulischen Hubzylinder und einer der Teleskopsäulen in einem eingefahrenen Zustand, in Blickrichtung von innen nach außen;
Fig. 9 eine Detailansicht eines der hydraulischen Hubzylinder und einer der Teleskopsäulen in einem ausgefahrenen Zustand in Blickrichtung von außen nach innen (in Richtung Hubkabine);
Fig. 10 eine schematische Ansicht der einzelnen Rohre einer Teleskopsäule zum Stabilisieren der Hubplattform.

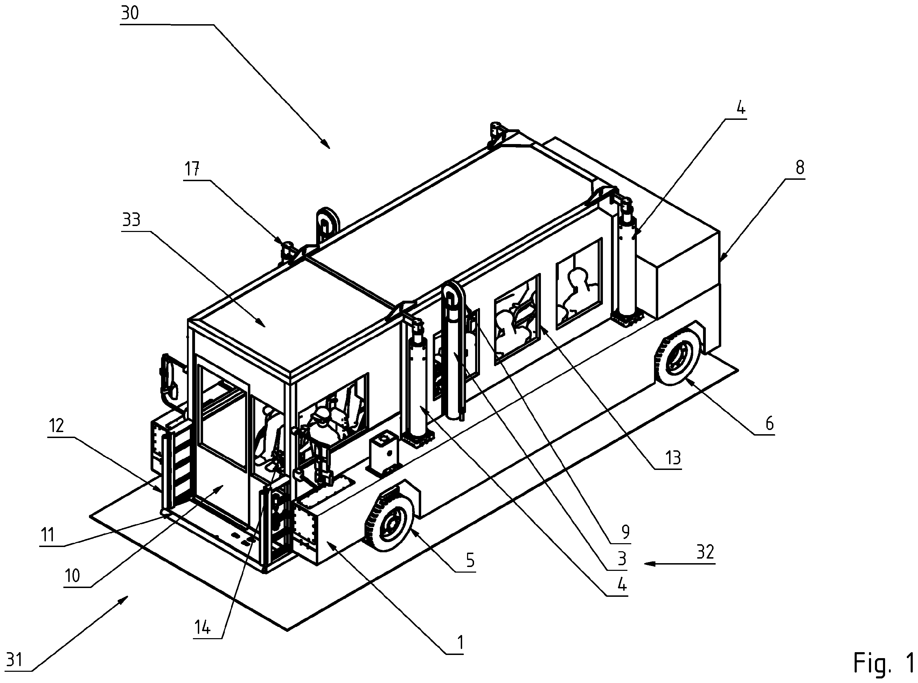

Fig. 1 zeigt eine perspektivische Ansicht eines erfindungsgemäßen Hubfahrzeugs 30 zum Transport von Personen oder Lasten im Flughafenbereich mit einem U-förmigen Fahrgestell 1, das in Fahrtrichtung nach vorne hin offen ist (im Bild links). Das U-förmige Fahrgestell 1 hat einen zentralen Bereich 31, in dem sich eine Hubkabine 33 befindet, die mit Hilfe einer Hubvorrichtung 32 zwischen einer auf der Fahrbahn aufliegenden und einer angehobenen Position verstellbar ist. Die zu befördernden Personen und Lasten können somit sowohl ebenerdig als auch auf Höhe der Einstiegsschwelle eines Flugzeugs ein- und ausgeladen werden.

Die Hubkabine 33 ist hier dazu ausgelegt, mehrere Passagiere sowie den Fahrer aufzunehmen. Der Boden der Hubkabine 33 besteht im Wesentlichen aus einer Hubplattform 2.

Das Fahrzeug ist mit lenkbaren Vorderrädern 5 und starren Hinterrädern 6 ausgestattet, wobei die Vorderräder 5 entweder alleine oder auch in Kombination mit den Hinterrädern 6 lenkbar sind. Die Hinterräder 6 werden über einen Antriebsmotor (nicht dargestellt) angetrieben, der im Aggregateraum 8 im Heck des Hubfahrzeugs 30 untergebracht ist.

Die vorstehend genannte Hubvorrichtung 32 zum Anheben bzw. Absenken der Hubkabine 33 umfasst in dem dargestellten Ausführungsbeispiel zwei hydraulisch betriebene Hubzylinder 3, die an den Längsseiten der Hubkabine 33 am Fahrgestell 1 befestigt sind. Im dargestellten Ausführungsbeispiel befindet sich auf jeder Längsseite jeweils ein Hubzylinder 3. Es könnten aber auch mehr Hubzylinder 3 vorgesehen sein.

Damit das Fahrzeug im angehobenen Zustand verfahrbar ist und dabei im Flughafenbereich den relativ hohen Windgeschwindigkeiten wiederstehen kann, werden die einzelnen Hubzylinder 3 durch mehrere Teleskopsäulen 4 verstärkt, welche die Hubkabine 33 in der angehobenen Position stabilisieren. Die Teleskopsäulen 4 sind ebenfalls an den Längsseiten des Fahrgestells 1 am Fahrgestell 1 befestigt. Im dargestellten Ausführungsbeispiel befinden sich auf jeder Längsseite der Hubkabine 33 jeweils zwei Teleskopsäulen 4. An einem oberen Ende der Teleskopsäulen 4 ist jeweils eine Kabinenaufnahme 17 vorgesehen, mit denen die einzelnen Teleskopsäulen 4 mit der Hubkabine 33 fest verbunden sind.

Im Unterschied zu den Hubzylindern 3 werden die Teleskopsäulen 4 nicht aktiv angetrieben sondern bei einer durch die Hubvorrichtung 32 angetriebenen Bewegung der Hubkabine 33 in vertikaler Richtung nur passiv mitgenommen.

Dadurch, dass die Hubkabine 33 mittig auf dem Fahrgestell 1 angeordnet ist, weist das gesamte Hubfahrzeug 30 außerdem eine außerordentlich hohe Standfestigkeit auf. Dies ermöglicht einen sicheren Hubbetrieb, wobei das Fahrzeug auch noch bei sehr hohen Windgeschwindigkeiten benutzt oder mit angehobener Hubkabine 33 in Schleichfahrt bewegt werden kann.

An einer Frontwand der Hubkabine 33 ist ein Führerstand 14 untergebracht, von dem aus sich das Hubfahrzeug 30 fahren und lenken lässt. Darüberhinaus lassen sich alle gewünschten Hubbewegungen der Hubkabine 33 sowie viele weitere Aktionen durchführen, wodurch ein sicherer und schneller Betrieb gewährleistet ist.

An der Frontwand der Hubkabine befindet sich ferner eine Plattform 11 und ein Geländer 12, die sich automatisch nach vorne ausfahren bzw. nach hinten einfahren lassen. Somit kann die Hubkabine 33 schnell und sicher an ein Flugzeug angedockt werden.

Die Hubkabine 33 ist an ihrer Front- und Rückwand ferner mit Türen 10 ausgestattet. Die Fronttür dient zum üblichen Ein- oder Aussteigen, während die Hecktür für eine evtl. notwendige Evakuierung erforderlich ist. Des Weiteren ist die Hubkabine 33 mit Fenstern 13 ausgestattet.

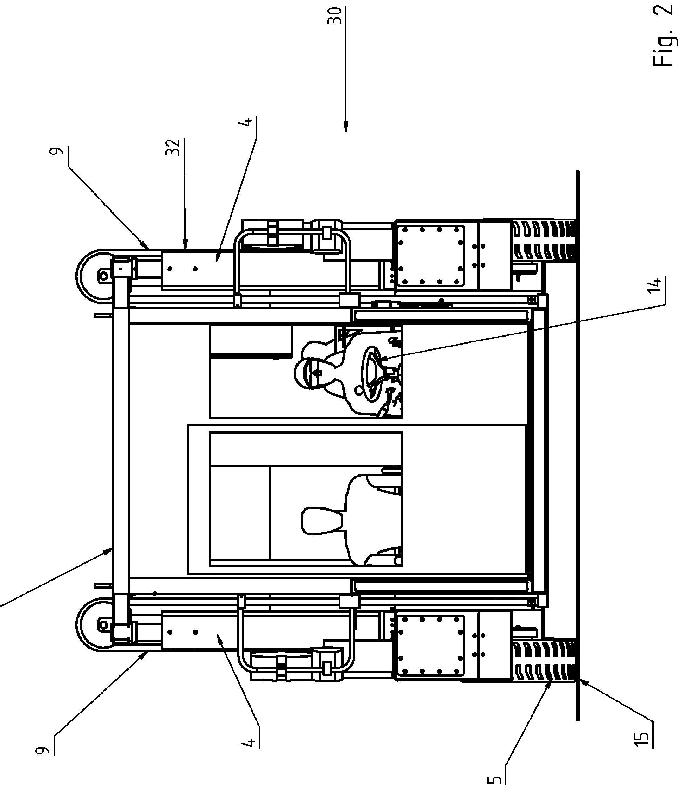

Fig. 2 zeigt das Hubfahrzeug von Fig. 1 in einer Fahrposition, in der die Hubkabine 33 leicht von der Fahrbahn 15 angehoben ist. Das Hubfahrzeug 30 lässt sich damit ähnlich einem Bus über die Fahrbahn 15 bewegen.

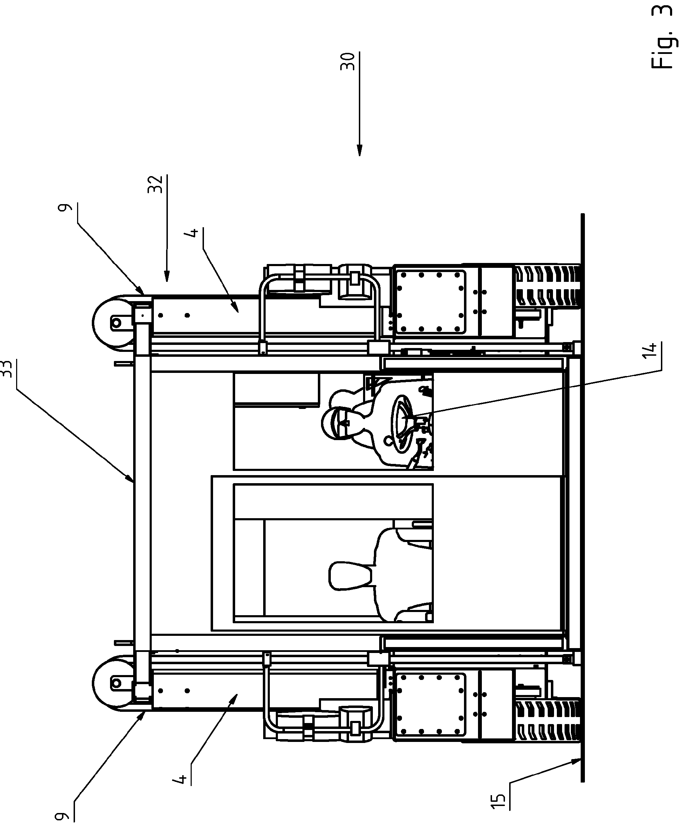

Fig. 3 zeigt eine Frontansicht des Hubfahrzeugs 30 von Fig. 1 in einer Position, in der die Hubkabine 33 auf die Fahrbahn 15 abgesetzt ist. Dadurch lässt sich ein Übergang zwischen Hubplattform und Fahrbahn 15 von weniger als 120 mm ermöglichen. Der Übergang kann zum Beispiel noch durch eine Rampe ausgeglichen werden.

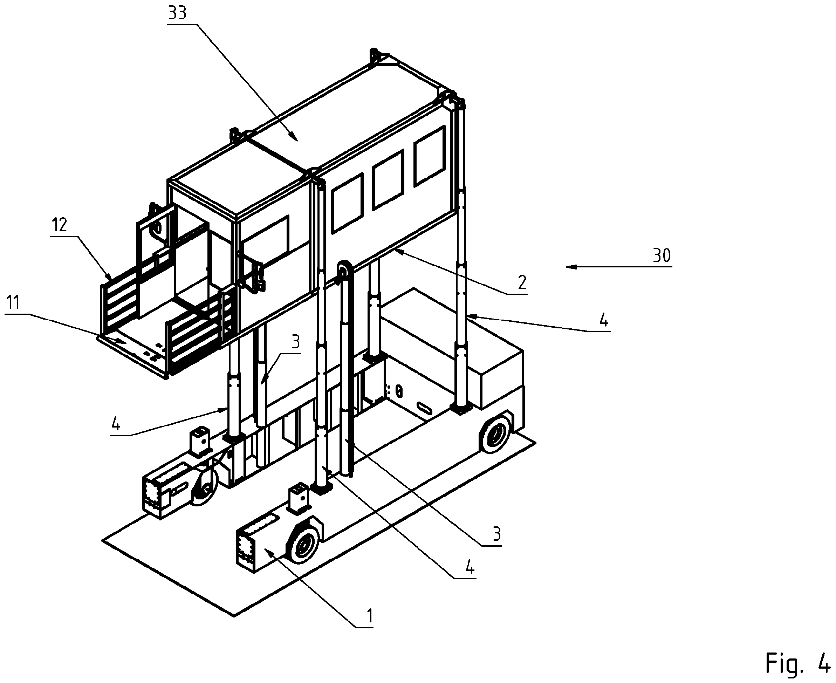

Fig. 4 zeigt das Hubfahrzeug 30 in einer Position, in der die Hubkabine 33 maximal angehoben ist. Wie zu erkennen ist, sind die Teleskopsäulen 4 weiter ausgefahren als die Länge der Hubzylinder 3 der Hubvorrichtung 32.

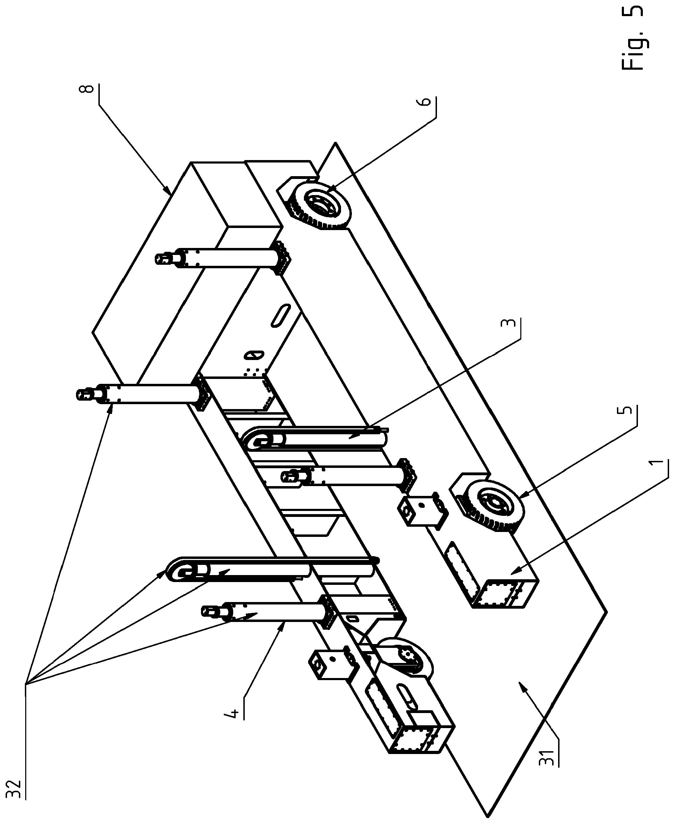

Fig. 5 zeigt schließlich noch eine perspektivische Darstellung des Hubfahrzeugs 30 ohne Hubkabine 33, wodurch das U-förmige Fahrgestell 1 gut zu erkennen ist. Das U-förmige Fahrgestell 1 ist nach vorne hin (im Bild links) offen. Am Heck des Hubfahrzeugs 30 befindet sich ein Aggregateraum 8.

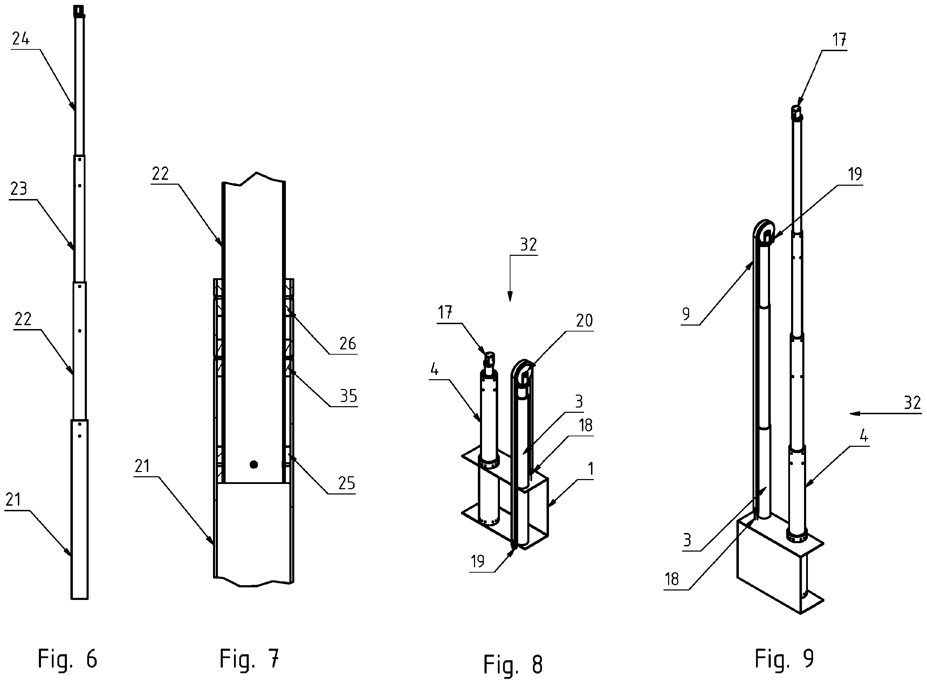

Fig. 6 zeigt eine vergrößerte Ansicht einer der Teleskopsäulen 4 zum Stabilisieren der Hubkabine 33. Die Teleskopsäule 4 umfasst mehrere - hier vier - ineinander gesteckte Rohre 21-24 die bei einer Bewegung der Hubkabine 33 in vertikaler Richtung passiv mitgenommen werden und entsprechend ein- oder ausfahren. Die Teleskopsäule 4 umfasst ein Außenrohr 21, das fest mit dem Fahrgestell 1 verbunden ist sowie mehrere ausfahrbare Innenrohre 22-24. Die ausfahrbaren Innenrohre 22-24 werden über Lagerbuchsen 25 und 26 geführt, die jeweils im Zwischenraum zwischen zwei benachbarten Rohren angeordnet sind. Die Ausfahrbewegung der einzelnen Rohre 22-24 wird jeweils durch einen Anschlag 35 begrenzt (siehe Fig. 7). Somit ist gewährleistet, dass jedes Teleskoprohr 22-24 nur eine definierte Länge ausgefahren werden kann. Die Überdeckung der einzelnen Rohre 21-24 mit dem nächstgrößeren Rohr ist so bemessen, dass zusammen mit der Dimensionierung der Teleskoprohre 21-24 eine ausreichende statische Stabilität des Gesamtsystems gewährleistet ist. Die Hubvorrichtung 32 arbeitet vorzugsweise hydraulisch, wobei die Pumpen und Ventile, die hierzu notwendig sind, im Aggregateraum 8 des Fahrgestells 1 untergebracht sind.

Die Fig. 8 und 9 zeigen verschiedene Ansichten einer Hubvorrichtung 32 mit einer benachbarten Teleskopsäule 4. Dabei zeigt Fig. 8 die Hubvorrichtung 32 im eingefahrenen Zustand von einer Innenseite des Fahrgestells 1 her betrachtet, Fig. 9 die Hubvorrichtung 32 im selben Zustand, aber von außen betrachtet.

Wie bereits erwähnt, übernimmt der Teleskopzylinder (Hubzylinder) 3 der Hubvorrichtung 32 die Hubarbeit in vertikaler Richtung, während die Teleskopsäule 4 aufgrund ihrer festen Verbindung mit der Hubkabine 33 nur passiv mitgenommen wird. Jeder der Hubzylinder 3 umfasst eine Hubkette 9, die mit einem Ende 18 am Fahrgestell 1 oder einem damit fest verbundenen Element befestigt ist. Das andere Ende 19 der Hubkette 9 ist vorzugsweise an der Hubplattform 2 oder einem unteren Abschnitt der Hubkabine 33 befestigt. Am oberen Ende des Hubzylinders 3 befindet sich eine Umlenkrolle 20, über die die Hubkette 9 geführt ist. Im abgesenkten Zustand der Hubkabine verläuft die Hubkette 9 somit vom Befestigungspunkt 18 am Fahrgestell 1 über die Umlenkrolle 20 und wieder zurück nach unten zum zweiten Befestigungspunkt 19 an der Hubplattform 9 bzw. Hubkabine 33. Wird nun der Hubzylinder 3 hydraulisch nach oben ausgefahren, legt die Hubkabine 33 nicht nur eine dem Hubweg des Hubzylinders 3 entsprechende Strecke zurück, sondern bewegt sich deutlich weiter nach oben, da die Hubkabine 33 von der Hubkette 9 weiter angehoben wird. Im vollständig ausgefahrenen Zustand ist die Länge der Teleskopsäule 4 daher größer als die Länge der Teleskopzylinder 3 der Hubvorrichtung 32.

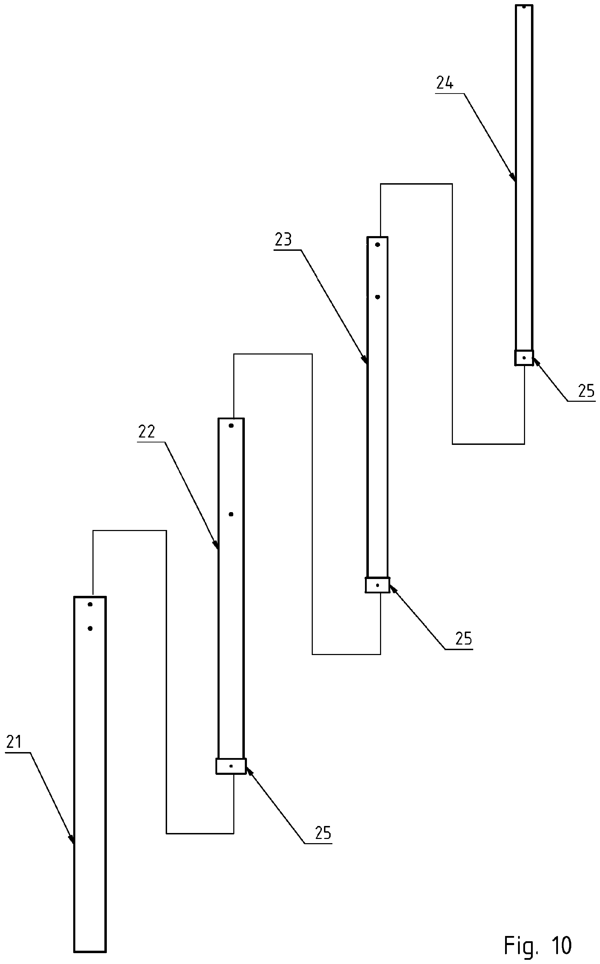

Fig. 10 zeigt schließlich noch die einzelnen Rohre 21-24 einer Teleskopsäule 4. Die einzelnen Rohre 21-24 können ein rundes oder wahlweise auch ein eckiges, insbesondere rechteckiges oder quadratisches Profil aufweisen. Am unteren Ende der einzelnen Rohre 21-24 befindet sich jeweils eine Führungsbuchse 25. Am oberen Ende der einzelnen Rohre 21-24 ist ebenfalls eine Führungsbuchse 26 vorgesehen.

## Patentansprüche

1. Hubfahrzeug (30) zum Transport von Personen oder Lasten, insbesondere im Flughafenbereich, mit einem U-förmigen Fahrgestell (1), das einen zentralen Bereich (31) aufweist, in dem sich eine Hubplattform (2) befindet, und mit einer Hubvorrichtung (32) zum Bewegen der Hubplattform (2) in vertikaler Richtung, die Hubvorrichtung (32) so ausgelegt ist, dass die Hubplattform (2) zwischen einer auf der Fahrbahn (15) aufliegenden und einer angehobenen Position verstellbar ist, derart, dass
- die Hubvorrichtung (32) mehrere teleskopisch ausfahrbare Hubzylinder (3) umfasst, die an beiden Längsseiten der Hubplattform (2) am Fahrgestell (1) befestigt und so ausgelegt sind, dass die Hubplattform (2) durch Ausfahren oder Einfahren der Hubzylinder (3) in vertikaler Richtung angehoben beziehungsweise abgesenkt werden kann;
- und dass ferner mehrere Teleskopsäulen (4) zum Stabilisieren der Hubplattform (2) vorgesehen sind, die an beiden Längsseiten der Hubplattform (2) am Fahrgestell (1) befestigt und jeweils mit der Hubplattform (2) verbunden sind, wobei die Teleskopsäulen (4) nicht zum Anheben der Hubplattform (2) ausgelegt sind, sondern bei einer durch die Hubvorrichtung (32) angetriebenen Bewegung der Hubplattform (2) in vertikaler Richtung passiv mitgenommen werden.

2. Hubfahrzeug (30) nach Anspruch 1, derart, dass die Hubvorrichtung (32) eine Hubkette (9) umfasst, die an ihrem einen Ende (18) am Fahrgestell (1) oder einem damit fest verbundenen Element, und an ihrem anderen Ende (19) an der Hubplattform (2) befestigt ist.

3. Hubfahrzeug (30) nach Anspruch 1 oder 2, derart, dass die Hubvorrichtung (32) eine Umlenkrolle (20) umfasst, über die die Hubkette (9) geführt ist.

4. Hubfahrzeug (30) nach Anspruch 1, derart, dass die Hubzylinder (3) der Hubvorrichtung (32) jeweils mehrere ineinander laufende Rohre umfassen.

5. Hubfahrzeug (30) nach einem der vorhergehenden Ansprüche, derart, dass die Teleskopsäulen (4) ein rechteckiges oder quadratisches Profil aufweisen.

6. Hubfahrzeug (30) nach einem der vorhergehenden Ansprüche, derart, dass die Teleskopsäulen (4) jeweils mehrere ineinander angeordnete Rohre (21-24) umfassen.

7. Hubfahrzeug (30) nach Anspruch 4, derart, dass die Rohre (21-24) über Lagerbuchsen (25, 26) geführt sind, die jeweils im Zwischenraum zwischen zwei benachbarten Rohren (21-24) angeordnet sind, so dass die Rohre (21-24) im Wesentlichen spielfrei aus- und eingefahren werden können.

8. Hubfahrzeug (30) nach einem der vorhergehenden Ansprüche, derart, dass das U-förmige Fahrgestell (1) nach vorne hin offen ist.

9. Hubfahrzeug (30) nach Anspruch 4, derart, dass bei einer Ausführung mit rechteckigen oder quadratischen Teleskopsäulen (4), die Rohre (21-24) der Teleskopsäulen (4) über Gleitplatten und Distanzbleche geführt sind, die jeweils im Zwischenraum zwischen zwei benachbarten Rohren (21-24) angeordnet sind, so dass die Rohre (21-24) im Wesentlichen spielfrei aus- und eingefahren werden können.

10. Hubfahrzeug (30) nach einem der vorhergehenden Ansprüche, derart, dass die Hubvorrichtung (32) hydraulisch betrieben wird.

11. Hubfahrzeug (30) nach einem der vorhergehenden Ansprüche, derart, dass die Hubplattform (2) als Hubkabine ausgeführt ist und dass an der Vorderseite der Hubkabine eine ausfahrbare Plattform (11) vorgesehen ist.

## Claims

1. Lifting vehicle (30) for transporting persons or loads, in particular in the airport sector, having a U-shaped chassis (1) that has a central region (31) in which a lifting platform (2) is located, and having a lifting device (32) for moving the lifting platform (2) in the vertical direction, said lifting device (32) being designed in such a way that the lifting platform (2) can be adjusted between a position abutting on the driving track (15) and a raised position, such that
- the lifting device (32) comprises several telescopically extendable lifting cylinders (3) which are fixed on the chassis (1) on both longitudinal sides of the lifting platform (2) and are designed in such a way that the lifting platform (2) can be raised or lowered in the vertical direction by extending or retracting the lifting cylinders (3);
- and several telescopic columns (4) are furthermore provided to stabilise the lifting platform (2), said columns being fixed on the chassis (1) on both longitudinal sides of the lifting platform (2) and being respectively connected to the lifting platform (2), wherein the telescopic columns (4) are not designed to raise the lifting platform (2) but rather are passively carried along in the vertical direction in the event of a movement of the lifting platform (2) driven by the lifting device (32).

2. Lifting vehicle (30) according to claim 1,
such that
the lifting device (32) comprises a lifting chain (9) which is fixed at one of its ends (18) on the chassis (1), or an element connected thereto, and on the lifting platform (2) at its other end (19).

3. Lifting vehicle (30) according to claim 1 or 2,
such that
the lifting device (32) comprises a deflection roller (20), via which the lifting chain (9) is guided.

4. Lifting vehicle (30) according to claim 1,
such that
the lifting cylinders (3) of the lifting device (32) respectively comprise several tubes running into one another.

5. Lifting vehicle (30) according to one of the preceding claims,
such that
the telescopic columns (4) have a rectangular or square profile.

6. Lifting vehicle (30) according to one of the preceding claims,
such that
the telescopic columns (4) each comprise several tubes (21-24) arranged one inside the other.

7. Lifting vehicle (30) according to claim 4,
such that
the tubes (21-24) are guided via bearing bushes (25, 26) which are respectively arranged in the intermediary space between two adjacent tubes (21-24), such that the tubes (21-24) can be extended and retracted substantially without play.

8. Lifting vehicle (30) according to one of the preceding claims,
such that
the U-shaped chassis (1) is open to the front.

9. Lifting vehicle (30) according to claim 4,
such that,
in a design having rectangular or square telescopic columns (4), the tubes (21-24) of the telescopic columns (4) are guided via sliding plates and spacer sheets, which are respectively arranged in the intermediary space between two adjacent tubes (21-24), such that the tubes (21-24) can be extended and retracted substantially without play.

10. Lifting vehicle (30) according to one of the preceding claims,
such that
the lifting device (32) is hydraulically operated.

11. Lifting vehicle (30) according to one of the preceding claims,
such that
the lifting platform (2) is designed as a lifting cabin, and an extendable platform (11) is provided on the front side of the lifting cabin.

## Revendications

1. Véhicule élévateur (30) destiné au transport de personnes ou de charges, notamment dans une zone aéroportuaire, comportant un châssis (1) en forme d'U présentant une zone centrale (31) dans laquelle se trouve une plate-forme élévatrice (2), et comportant un dispositif élévateur (32) destiné à mouvoir la plate-forme élévatrice (2) dans le sens de la verticale, ledit dispositif élévateur (32) étant conçu de telle manière que la plate-forme élévatrice (2) est déplaçable entre une position où elle est disposée sur la chaussée (15) et une position surélevée,
de telle sorte que
- le dispositif élévateur (32) comprend plusieurs vérins élévateurs (3) pouvant se déployer de manière télescopique, lesquels sont fixés au châssis (1) sur les deux côtés longs de la plate-forme élévatrice (2) et sont conçus de telle manière que la plate-forme élévatrice (2) peut être surélevée ou abaissée dans le sens de la verticale selon que les vérins élévateurs (3) se déploient ou se rétractent ;
- et que, en outre, plusieurs colonnes télescopiques (4) destinées à stabiliser la plate-forme élévatrice (2) sont prévues en étant fixées au châssis (1) sur les deux côtés longs de la plate-forme élévatrice (2) et en étant reliées chacune à la plate-forme élévatrice (2), lesdites colonnes télescopiques (4) n'étant pas conçues pour soulever la plate-forme élévatrice (2) mais pour être entraînées passivement lors d'un mouvement de la plate-forme élévatrice (2) dans le sens de la verticale sous l'action du dispositif élévateur (32).

2. Véhicule élévateur (30) selon la revendication 1, de telle sorte que le dispositif élévateur (32) comprend une chaîne de levage (9) fixée par une extrémité (18) au châssis (1) ou à un élément solidaire de celui-ci, et par une autre extrémité (19) à la plate-forme élévatrice (2).

3. Véhicule élévateur (30) selon la revendication 1 ou 2, de telle sorte que le dispositif élévateur (32) comprend un galet de renvoi (20) sur lequel est guidée la chaîne de levage (9).

4. Véhicule élévateur (30) selon la revendication 1, de telle sorte que les vérins élévateurs (3) du dispositif élévateur (32) comprennent chacun plusieurs tubes s'emboîtant les uns dans les autres.

5. Véhicule élévateur (30) selon l'une des revendications précédentes, de telle sorte que les colonnes télescopiques (4) présentent un profil rectangulaire ou carré.

6. Véhicule élévateur (30) selon l'une des revendications précédentes, de telle sorte que les colonnes télescopiques (4) comprennent chacune plusieurs tubes (21-24) s'emboîtant les uns dans les autres.

7. Véhicule élévateur (30) selon la revendication 4, de telle sorte que les tubes (21-24) sont guidés par des coussinets (25, 26) disposés chacun dans l'interstice séparant deux tubes (21-24) adjacents, de telle manière que les tubes (21-24) peuvent se rétracter et se déployer sensiblement sans aucun jeu.

8. Véhicule élévateur (30) selon l'une des revendications précédentes, de telle sorte que le châssis (1) en forme d'U est ouvert vers l'avant.

9. Véhicule élévateur (30) selon la revendication 4, de telle sorte que, dans le cas d'une conception rectangulaire ou carrée des colonnes télescopiques (4), les tubes (21-24) des colonnes télescopiques (4) sont guidés sur des plaques de coulissement et des entretoises disposées chacune dans l'interstice séparant deux tubes (21-24) adjacents, de telle manière que les tubes (21-24) peuvent se rétracter et se déployer sensiblement sans aucun jeu.

10. Véhicule élévateur (30) selon l'une des revendications précédentes, de telle sorte que le dispositif élévateur (32) est actionné par voie hydraulique.

11. Véhicule élévateur (30) selon l'une des revendications précédentes, de telle sorte que la plate-forme élévatrice (2) est conçue à la manière d'une cabine élévatrice et que, sur l'avant de ladite cabine élévatrice, il est prévu une plate-forme (11) déployable.
